# EUROPEAN PATENT APPLICATION

(11) **EP 2 514 935 A1**
(43) Date of publication of application: **24.10.2012**
(21) Application number: 10837340.8
(22) Date of filing: 05.10.2010
(51) Int. Cl.: F01N 3/08, F01N 3/24, F01N 3/28, F02D 45/00

(54) **EXHAUST GAS PURIFICATION METHOD AND EXHAUST GAS PURIFICATION SYSTEM FOR RECIPROCATING INTERNAL COMBUSTION ENGINE**

(30) Priority: 16.12.2009 JP 2009285303
(71) Applicant: Mitsubishi Heavy Industries, Ltd., Tokyo 108-8215 (JP)
(72) Inventor: ISHIDA, Hiroyuki, Tokyo 108-8215 (JP); OSAFUNE, Shinnosuke, Tokyo 108-8215 (JP)
(74) Representative: HOFFMANN EITLE
(86) International application number: PCT/JP2010/067422
(87) International publication number: WO 2011/074310

(57) **Abstract**

In a reciprocating internal combustion engine having a turbocharger, the removal of NO_{X} from exhaust gas with use of a SCR system is made possible without causing deterioration of transient characteristics of the reciprocating internal combustion engine. In a reciprocating marine diesel engine (10) having a turbocharger (30) arranged in an exhaust pipe (38, 44, 48), an aqueous urea solution supply unit (42) is provided in the exhaust pipe (38) upstream of a turbine (34), so that an aqueous urea solution (b) is supplied from an aqueous urea solution tank (40). The aqueous urea solution (b) is evaporated with potential heat of the exhaust gas and hydrolyzed into ammonia gas. The ammonia gas is uniformly stirred and mixed with the exhaust gas in a highly turbulent field of the turbine (34). The exhaust gas is then sent to a SCR catalyst converter (46) provided in the exhaust pipe (44) downstream of the turbocharger (30), where NO_{X} in the exhaust gas is reduced by the ammonia gas into nitrogen and water vapor. Since the aqueous urea solution (b) is supplied to the exhaust pipe (38) upstream of the turbine (34), ammonia gas can be generated without the need of any additional heating equipment such as an auxiliary burner.

## Description

### TECHNICAL FIELD

This invention relates to an exhaust gas purification method and an exhaust gas purification system for use in a reciprocating internal combustion engine such as a marine diesel engine.

### BACKGROUND ART

Diesel engines, which have higher fuel efficiency than petrol engines, are widely employed in ships and automobiles by transportation companies and carriers. However, the use of diesel engines has caused a problem of emission of particulate matters (PM) such as unburned fuel and NO_{X} (e.g. NO and NO₂) also known as nitrogen oxides contained in exhaust gas. As a solution to solve this problem by removing the NO_{X} from the exhaust gas, a method is known in which the NO_{X} contained in the exhaust gas is removed by reducing the same over a catalyst with ammonia gas obtained by hydrolyzing an aqueous urea solution. This method is known as a SCR (Selective Catalytic Reduction) system.

Patent Literature 1 (Japanese Patent Application Laid-Open No. 2009-209896) discloses this SCR system. This SCR system is configured such that PM and a gaseous hydrocarbon component are removed from exhaust gas emitted by a diesel engine in an upstream portion of an exhaust path and then ammonia gas is reacted with NO_{X} over a SCR catalyst arranged in a downstream portion, whereby the NO_{X} is reduced into nitrogen and water.

Ammonia gas is difficult to handle because of its toxicity. It is therefore required to use double-wall piping, or to keep piping and containers cold in order to prevent vaporization of ammonia. For this reason, an aqueous urea solution (CO (NH₂)₂·aq) is sprayed in the mist form into exhaust gas so that the aqueous urea solution is vaporized by heat of the exhaust gas, while the aqueous urea solution is hydrolyzed into ammonia gas.

The maximum concentration of ammonia gas that is allowed to be emitted into the atmosphere is regulated very strictly. Therefore, a quantity of aqueous urea solution to be supplied must be adjusted such that a quantity of ammonia gas is equal to or less than that of NO_{X} in the exhaust gas in order to ensure that no ammonia remains after the reduction reaction.

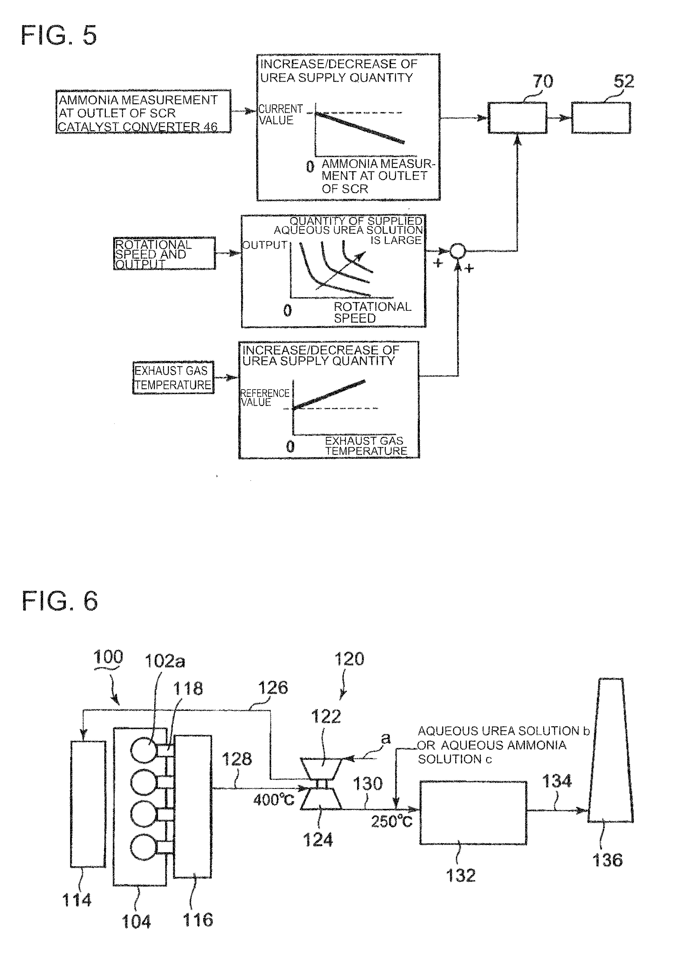

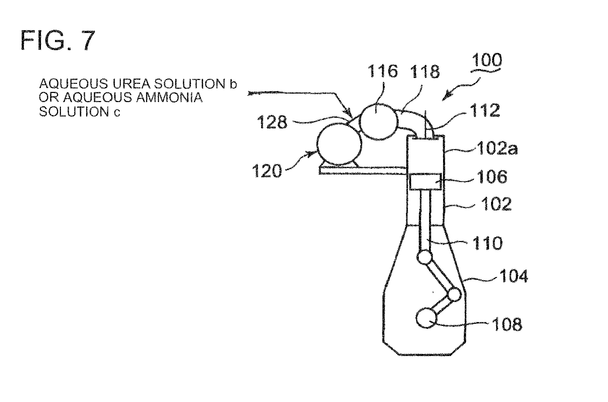

In a low-speed reciprocating marine diesel engine, when an exhaust path of a turbocharger is provided in an exhaust path, a SCR catalyst is arranged on the downstream side of the exhaust path of the turbocharger for a reason as described below. This configuration is shown in Figs. 6 and 7.
As shown in Figs. 6 and 7, a two-cycle reciprocating marine diesel engine 100 is composed of a plurality of cylinders 102, a scavenging chamber 114, and an exhaust manifold 116. A crank chamber 104 is provided under the cylinders 102, and a crank shaft 108 is provided in the crank chamber 104. A piston 106 provided in each of the cylinders 102 is connected to the crank shaft 108 via a piston rod 110.

Each of the cylinders 102 has a cylinder head 102a provided on top thereof. Each of the cylinder heads 102a is connected to the exhaust manifold 116 via an exhaust branch pipe 118. Each of the cylinder head 102a has an exhaust valve 112 at an outlet thereof.

Compressed air a compressed by a compressor 122 of a turbocharger 120 is supplied into the cylinders 102 via a scavenging pipe 126 and a scavenging chamber 114. Exhaust gas discharged from the cylinders 102 are discharged into the exhaust manifold 116 via the exhaust branch pipes 118. The exhaust gas discharged from the exhaust manifold 116 into an exhaust pipe 128 drives a turbine 124 of the turbocharger 120 and then is discharged into an exhaust pipe 130. The exhaust gas discharged into the exhaust pipe 130 reaches a SCR catalyst converter 132 having a SCR catalyst incorporated therein. An aqueous urea solution b or aqueous ammonia solution c is sprayed into the exhaust pipe 130 whereby the aqueous urea solution b is evaporated by heat of the exhaust gas and hydrolyzed into ammonia gas.

The ammonia gas is reacted with NO_{X} in the exhaust gas over the SCR catalyst incorporated in the SCR catalyst converter 132, whereby the NO_{X} is reduced into nitrogen and water vapor. The exhaust gas from which the NO_{X} has been removed is discharged from a chimney 136 through the exhaust pipe 134. Numerical values in the figures denote temperature of the exhaust gas flowing through the exhaust pipe 128 or 130.

Patent Literature 1: Japanese Patent Application Laid-Open No. 2009-209896

When the SCR catalyst converter 132 is arranged in the exhaust pipe 130 downstream of the turbocharger 120, the exhaust gas temperature becomes as low as about 250°C. This temperature is lower than around 320°C that is the temperature at which the SCR catalyst can fully exert its catalytic function. Accordingly, the SCR catalyst is not able to exert its catalytic function. Particularly, when an aqueous urea solution which is relatively easier to handle than toxic ammonia is used, even higher temperature (350°C or higher) is required for a chemical reaction to convert the aqueous urea solution into ammonia.
In order to satisfy this temperature condition, additional heating equipment such as an auxiliary burner may be provided to heat the exhaust gas, but this will lead to deterioration of fuel efficiency in totality of the reciprocating internal combustion engine.

Therefore, it is conceivable to provide the SCR catalyst converter 132 in the exhaust pipe 128 upstream of the turbine 124. However, although this solution satisfies the condition for the exhaust gas temperature, the SCR catalyst having a high heat capacity will take heat that should be supplied to the turbine 124, which possibly leads to deterioration of transient characteristics of the marine diesel engine 100.
Thus, the combination of the supply of the aqueous urea solution and the SCR catalyst causes problems as described above, regardless of whether it is located upstream or downstream of the turbocharger.

### DISCLOSURE OF THE INTENTION

In view of the problems of the prior art described above, it is an object of this invention to make it possible to remove NO_{X} from exhaust gas discharged from an internal combustion engine having a turbocharger by means of a SCR system without causing deterioration of transient characteristics of the internal combustion engine.

In order to achieve this object, this invention provides an exhaust gas purification method for a reciprocating internal combustion engine provided with a turbocharger, which is configured to supply a reducing agent to an exhaust path of the reciprocating internal combustion engine so that NO_{X} in exhaust gas is removed by causing the reducing agent to react with the NO_{X} over a reduction catalyst, and the method includes: a urea decomposition step of supplying an aqueous urea solution to the exhaust path between the reciprocating internal combustion engine and the turbocharger so as to hydrolyze the aqueous urea solution into ammonia gas with potential heat of the exhaust gas; a mixing step of uniformly mixing the ammonia gas with the exhaust gas by introducing the ammonia gas into a turbulent field of the exhaust gas formed within a turbine of the turbocharger; and a reducing step of removing NO_{X} in the exhaust gas by reducing the NO_{X} with the ammonia gas in the presence of the reduction catalyst within the exhaust path downstream of the turbine.

In the method of this invention, the aqueous urea solution is supplied into the exhaust path between the reciprocating internal combustion engine and the turbocharger, and the aqueous urea solution is evaporated with potential heat of the exhaust gas before the aqueous urea solution reaches the turbine of the turbocharger so as to be hydrolyzed into ammonia gas. The generated ammonia gas is uniformly mixed with the exhaust gas in a highly turbulent field formed within the turbine and, in this state, the ammonia gas is reacted with NO_{X} in the exhaust gas under the presence of a reduction catalyst so as to reduce the NO_{X}.

The arrangement of the aqueous urea solution supply unit on the upstream side of the turbocharger makes it possible to spray the aqueous urea solution into exhaust gas with a higher temperature, and hence to generate ammonia gas more efficiently. Further, since the vaporized ammonia gas enters the turbine to be exposed to a highly turbulent field in the turbine before entering the SCR catalyst, the mixing between the exhaust gas and the ammonia gas can be further accelerated. This can be done more effectively when the aqueous urea solution supplying position is set such that the sprayed aqueous urea solution is vaporized before reaching the turbocharger.

Since the SCR catalyst having high heat capacity is arranged on the downstream side of the turbocharger, deterioration of transient characteristics of the reciprocating internal combustion engine can be prevented more effectively than when both the aqueous urea solution supply unit and the SCR catalyst are arranged on the upstream side of the turbocharger.
As a result, sufficient exhaust gas purification performance can be achieved without adding any heating equipment such as an auxiliary burner which might cause deterioration of fuel efficiency of the internal combustion engine.

In the method of this invention, an ammonia concentration in the exhaust gas after the reducing step is detected, and a quantity of the aqueous urea solution to be supplied is adjusted based on this detected value so as to decrease the concentration of residual ammonia in the exhaust gas. This makes it possible to decrease the concentration of residual ammonia in the exhaust gas, and to minimize the external emission of ammonia having toxicity.

In the method of invention, an operational state quantity of the reciprocating internal combustion engine is detected, and a quantity of the aqueous urea solution to be supplied is adjusted to a preliminarily set supply quantity according to this detected value so as to reduce the concentration of NO_{X} and the concentration of residual ammonia in the exhaust gas. The quantity of the aqueous urea solution to be supplied is thus adjusted according to an operational state of the reciprocating internal combustion engine, whereby it is made possible to supply a sufficient quantity of urea for reduction reaction of NO_{X} even when the operational state of the reciprocating internal combustion engine is changed, and the residual ammonia concentration in the exhaust gas can be decreased.

Operational state of the reciprocating internal combustion engine can be represented by a state quantity, such as rotational speed, output and exhaust gas temperature, of the reciprocating internal combustion engine. A quantity of the exhaust gas can be obtained based on the rotational speed and the output. Both the NO_{X} quantity and the residual ammonia quantity can be decreased by determining the quantity of the aqueous urea solution to be supplied to be a value that is preset for exhaust gas quantity and temperature obtained based on these state quantities.

An exhaust gas purification system which is directly usable for implementing the method of this invention is an exhaust gas purification system for a reciprocating internal combustion engine provided with a turbocharger, having on an exhaust path of the reciprocating internal combustion engine a reducing agent supply unit, and a reduction unit which is arranged downstream of the reducing agent supply unit and reduces NO_{X} by causing the exhaust gas to react with the reducing agent over a reduction catalyst. The exhaust gas purification system includes: an aqueous urea solution supply unit which is arranged on the exhaust path between the reciprocating internal combustion engine and the turbocharger and supplies an aqueous urea solution into exhaust gas; a urea decomposition zone which is arranged on the exhaust path between the aqueous urea solution supply unit and the turbocharger, and hydrolyzes the aqueous urea solution into ammonia gas with potential heat of the exhaust gas before the aqueous urea solution supplied into the exhaust path reaches the turbocharger; and a reduction unit which is arranged on the exhaust path downstream of the turbocharger and removes NO_{X} in the exhaust gas by reducing the NO_{X} with the ammonia gas in the presence of the reduction catalyst.

In this system of the invention, the aqueous urea solution supply unit is provided in an exhaust path between the reciprocating internal combustion engine and the turbocharger, where the exhaust gas temperature is high, so that the aqueous urea solution is evaporated and hydrolyzed into ammonia gas with the exhaust gas having the high temperature. The generated ammonia gas is then uniformly mixed with the exhaust gas in a highly turbulent field in the turbine of the turbocharger. In this state, the ammonia gas is reacted with NO_{X} in the exhaust gas in the presence of a reduction catalyst so as to reduce the NO_{X}.

Thus, the arrangement of the aqueous urea solution supply unit on the upstream side of the turbocharger makes it possible to spray the aqueous urea solution into exhaust gas having a higher temperature and to generate ammonia gas more efficiently. Further, since evaporated ammonia gas enters the turbine and is exposed to a highly turbulent field in the turbine before entering the SCR catalyst, the mixing between the exhaust gas and the ammonia gas can be accelerated further more.
The arrangement of the SCR catalyst having a high heat capacity on the downstream side of the turbocharger makes it possible to suppress deterioration of transient characteristics of the reciprocating internal combustion engine. Consequently, a sufficient exhaust gas purification performance can be ensured without adding an auxiliary burner or other heating equipment which likely leads to deterioration of fuel efficiency of the internal combustion engine.

In the system of this invention, the aqueous urea solution supply unit is provided on an exhaust branch pipe connected to the reciprocating internal combustion engine and to an exhaust manifold, and a phase detection sensor is provided for detecting a crank phase of the reciprocating internal combustion engine; and the aqueous urea solution is supplied to the exhaust branch pipe synchronously with a timing when an exhaust valve of the reciprocating internal combustion engine is opened.
This configuration makes it possible to supply the aqueous reducing agent solution into the exhaust path at a timing when the exhaust gas is discharged into the exhaust path, whereby the reduction reaction can be caused to occur between the ammonia gas and the NO_{X} and the NO_{X} concentration in the exhaust gas can be decreased without wasting the aqueous urea solution.

In the system of this invention, the aqueous urea solution is sprayed into the exhaust gas by means of the aqueous urea solution supply unit, and the position of the aqueous urea solution supply unit is set to such a position that the sprayed aqueous urea solution can be vaporized before reaching the turbocharger. This makes it possible to efficiently generate ammonia gas from the aqueous urea solution before the aqueous urea solution reaches the turbocharger. Therefore, the deterioration of fuel efficiency of the internal combustion engine can be suppressed since no additional heating equipment such as an auxiliary burner is required.

The method of this invention is an exhaust gas purification method for a reciprocating internal combustion engine provided with a turbocharger, which is configured to supply a reducing agent to an exhaust path of the reciprocating internal combustion engine so that NO_{X} in exhaust gas is removed by causing the reducing agent to react with the NO_{X} over a reduction catalyst, and the method includes: a urea decomposition step of supplying an aqueous urea solution to the exhaust path between the reciprocating internal combustion engine and the turbocharger so as to hydrolyze the aqueous urea solution into ammonia gas with potential heat of the exhaust gas; a mixing step of uniformly mixing the ammonia gas with the exhaust gas by introducing the ammonia gas into a turbulent field of the exhaust gas formed within a turbine of the turbocharger; and a reducing step of removing NO_{X} in the exhaust gas by reducing the NO_{X} with the ammonia gas in the presence of the reduction catalyst within the exhaust path downstream of the turbine. According to this method, the aqueous urea solution can be efficiently converted into ammonia gas in the exhaust gas having a high temperature, and the vaporized ammonia gas and the exhaust gas can be introduced into the SCR catalyst in a state in which they have been uniformly mixed in a highly turbulent field in the turbine. Consequently, the reduction reaction of NO_{X} over the SCR catalyst can be accelerated and the effect of decreasing the NO_{X} can be enhanced.

Further, the arrangement of the SCR catalyst having a high heat capacity on the downstream side of the turbocharger makes it possible to suppress deterioration of the transient characteristics of the reciprocating internal combustion engine. As a result, a sufficient exhaust gas purification performance can be ensured without adding an auxiliary burner or other heating equipment which likely lead to deterioration of the fuel efficiency of the internal combustion engine.

The system of this invention is an exhaust gas purification system for a reciprocating internal combustion engine provided with a turbocharger, having on an exhaust path of the reciprocating internal combustion engine a reducing agent supply unit, and a reduction unit which is arranged downstream of the reducing agent supply unit and reduces NO_{X} by causing the exhaust gas to react with the reducing agent over a reduction catalyst, and the exhaust gas purification system includes: an aqueous urea solution supply unit which is arranged on the exhaust path between the reciprocating internal combustion engine and the turbocharger and supplies an aqueous urea solution into exhaust gas; a urea decomposition zone which is arranged on the exhaust path between the aqueous urea solution supply unit and the turbocharger, and hydrolyzes the aqueous urea solution into ammonia gas with potential heat of the exhaust gas before the aqueous urea solution supplied into the exhaust path reaches the turbocharger; and a reduction unit which is arranged on the exhaust path downstream of the turbocharger and removes NO_{X} in the exhaust gas by reducing the NO_{X} with the ammonia gas in the presence of the reduction catalyst. The system configured in this manner is able to provide the same advantageous effects of those of the method of this invention described above.

### BRIEF DESCRIPTION OF THE DRAWINGS

Fig. 1 is a system diagram illustrating an exhaust gas processing apparatus for a reciprocating marine diesel engine according to a first embodiment of the method and apparatus of the invention;
Fig. 2 is an explanatory front view of the reciprocating marine diesel engine according to the first embodiment;
Fig. 3 is a system diagram illustrating an exhaust gas processing apparatus for a reciprocating marine diesel engine according to a second embodiment of the method and apparatus of the invention;
Fig. 4 is a system diagram illustrating an exhaust gas processing apparatus for a reciprocating marine diesel engine according to a third embodiment of the method and apparatus of the invention;
Fig. 5 is a block diagram illustrating a control device according the third embodiment;
Fig. 6 is a system diagram illustrating a conventional exhaust gas processing apparatus for a reciprocating marine diesel engine; and
Fig. 7 is an explanatory front view of the reciprocating marine diesel engine shown in Fig. 6.

### BEST MODE FOR CARRYING OUT THE INVENTION

The invention will now be described based on its exemplary embodiments illustrated in the drawings. It should be understood that sizes, materials, shapes, and relative arrangement of parts and components described in these embodiments are not meant to limit the scope of the invention unless otherwise specified.

### (First Embodiment)

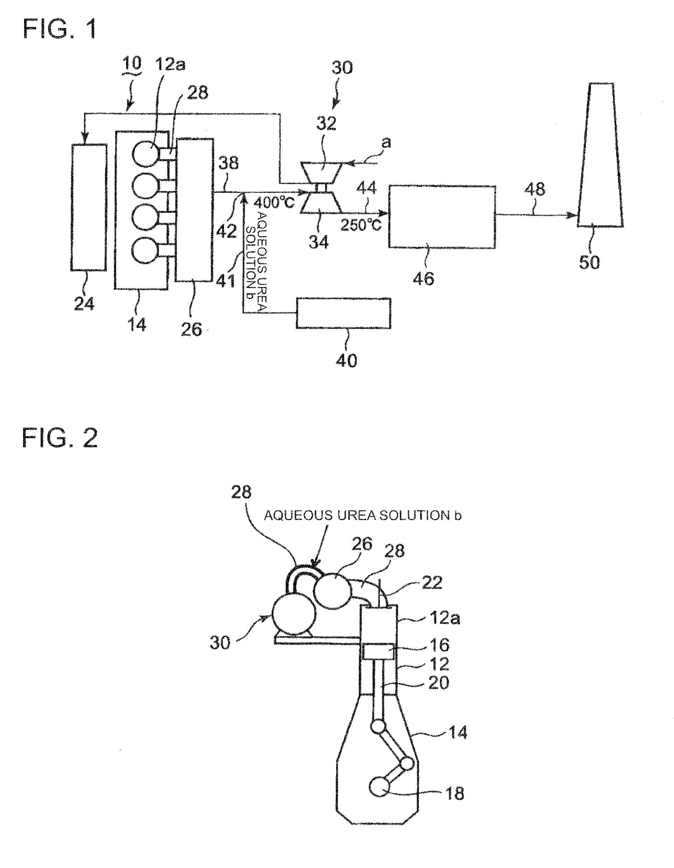

A first embodiment in which the method and system of this invention is applied to a two-cycle reciprocating marine diesel engine will be described with reference to Figs. 1 and 2. In Figs. 1 and 2, a two-cycle reciprocating marine diesel engine 10 is composed of a plurality of cylinders 12, a scavenging chamber 24, and an exhaust manifold 26. A crank chamber 14 is provided under the cylinders 12, and a crank shaft 18 is provided within a crank chamber 14. A piston 16 provided within each of the cylinders 12 is connected to the crank shaft 18 via a piston rod 20.

A cylinder head 12a is provided in an upper part of each of the cylinders 12, and each cylinder head 12a is connected to the exhaust manifold 26 via an exhaust branch pipe 28. An exhaust valve 22 is provided at an outlet of the cylinder head 12a.

Compressed air a which is compressed by a compressor 32 of a turbocharger 30 is supplied to the cylinders 12 via a scavenging pipe 36 and a scavenging chamber 14. Exhaust gas discharged from the cylinders 12 is discharged into the exhaust manifold 26 through the exhaust branch pipe 28. The exhaust gas discharged from the exhaust manifold 26 into an exhaust pipe 38 activates a turbine 34 of the turbocharger 30, and then is discharged into an exhaust pipe 44. The exhaust gas discharged into the exhaust pipe 44 reaches a SCR catalyst converter 46 having a SCR catalyst incorporated therein.

An aqueous urea solution supply unit 42 is provided in the exhaust pipe 38, and is connected to an aqueous urea solution tank 40 via a piping 41. An aqueous urea solution b is supplied from the aqueous urea solution tank 40 to the aqueous urea solution supply unit 42 by a pump or the like (not shown). The aqueous urea solution b is sprayed into the exhaust pipe 38 by the aqueous urea solution supply unit 42. Numerical values in the figures denote temperature of the exhaust gas flowing through the exhaust pipe 38 or 44.

The aqueous urea solution b is evaporated by potential heat of the exhaust gas flowing through the exhaust pipe 38, and is hydrolyzed into ammonia gas. The exhaust pipe 38 has a length and inner diameter which are large enough to let the aqueous urea solution b be evaporated by potential heat of the exhaust gas and be hydrolyzed into ammonia gas. The generated ammonia gas flows into the turbine 34. The ammonia gas is stirred in a highly turbulent field within the turbine 34 and uniformly mixed with the exhaust gas. The ammonia gas, which has exited from the turbine 34, reaches the SCR catalyst converter 46 and reacts with NO_{X} contained in the exhaust gas over the SCR catalyst incorporated in the SCR catalyst converter 46, whereby NO_{X} is reduced into nitrogen and water vapor. Thus, the exhaust gas from which NO_{X} has been removed is discharged outside from a chimney 50 via the exhaust pipe 48.

According to this embodiment, the aqueous urea solution b is supplied into the exhaust pipe 38 and is evaporated by potential heat of the exhaust gas flowing through the exhaust pipe 38 while being hydrolyzed into ammonia gas. The generated ammonia gas is stirred and mixed with the exhaust gas in a highly turbulent field within the turbine 34. This makes it possible to accelerate the reduction reaction between ammonia gas and NO_{X} in the SCR catalyst converter 46.

In this embodiment, only the aqueous urea solution supply unit 42 is arranged in the exhaust pipe 38 upstream of the turbocharger 30 where the potential temperature of the exhaust gas is higher, whereby it is made possible to spray the aqueous urea solution b into the exhaust gas with a higher temperature, and hence the aqueous urea solution b can be converted into ammonia gas before the aqueous urea solution b reaches the turbocharger 30. The vaporized ammonia gas enters the turbine 34 and is exposed to the highly turbulent field of in the turbine 34 before entering the SCR catalyst converter 46, whereby the mixing of the exhaust gas and the ammonia gas can be accelerated further, and the NO_{X} concentration can be further decreased.

Since the SCR catalyst converter 46 with a greater heat capacity is arranged downstream of the turbocharger 30, it is made possible to suppress the deterioration of transient characteristics of the reciprocating marine diesel engine 10. As a result of these features, a sufficient exhaust gas purification performance can be ensured without adding an auxiliary burner or other heating equipment which might lead to deterioration of the fuel efficiency of the reciprocating marine diesel engine 10.

### (Second Embodiment)

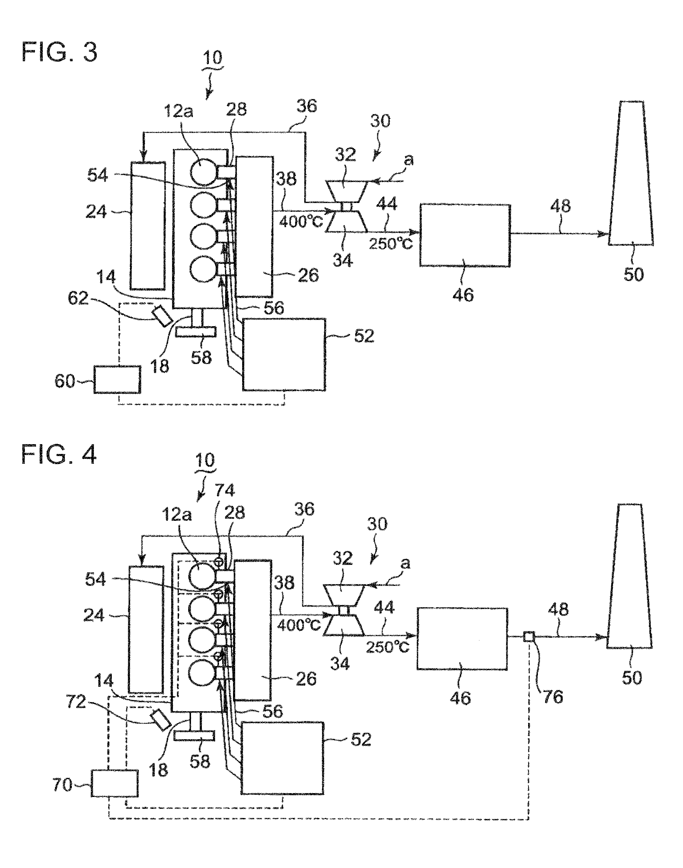

A second embodiment of the method and system according to this invention will be described with reference to Fig. 3. As shown in Fig. 3, a plurality of exhaust branch pipes 28 are provided with a plurality of aqueous urea solution supply units 54, respectively. An aqueous urea solution b is supplied to the aqueous urea solution supply unit 54 from an aqueous urea solution supply device 52 via respective piping 56.
The crank shaft 18 projecting out of the crank chamber 14 is mounted with a balancer 58. A crank phase sensor 62 is provided in the vicinity of the crank shaft 18 so that a phase of the crank shaft 18 is detected by detecting a detection mark (not shown) marked on the balancer 58 by means of the crank phase sensor 62.

A phase detection signal generated by the crank phase sensor 62 is sent to a controller 60. Based on this phase detection signal, the controller 60 transmits a control signal to the aqueous urea solution supply device 52, so that the aqueous urea solution b is supplied according to this control signal to the aqueous urea solution supply unit 54 at a timing when the exhaust valve 22 provided in the cylinder head 12a is opened.
Except the features described above, the configuration of this second embodiment is the same as that of the first embodiment, and the same parts or components are assigned with the same reference numerals.

According to this second embodiment, the aqueous urea solution b is supplied into the exhaust branch pipe 26 in which the exhaust gas temperature is higher than that in the exhaust pipe 38. This facilitates evaporation of the aqueous urea solution b and hydrolyzation into ammonia gas.
Further, this configuration makes it possible to provide a longer distance from the exhaust branch pipe 28 for supplying the aqueous urea solution b to the turbine 34. Therefore, the mixing between the exhaust gas and the aqueous urea solution b can be accelerated, and thus ammonia gas can be generated effectively. This makes it possible to accelerate the reduction reaction of NO_{X} in the SCR catalyst converter 46, and to increase the effect of decreasing NO_{X} contained in the exhaust gas.

Since the aqueous urea solution b is supplied to the exhaust branch pipe 26 at a timing when the exhaust valve 22 is opened, the reduction reaction between the ammonia gas and NO_{X} is caused to occur effectively and the NO_{X} concentration in the exhaust gas can be decreased without wasting the aqueous urea solution.

### (Third Embodiment)

A third embodiment of the method and system of this invention will be described with reference to Fig. 4 and Fig. 5. As shown in Fig. 4, this third embodiment is the same as the second embodiment in that the aqueous urea solution supply unit 54 is provided in each of the exhaust branch pips 28. The third embodiment is different from the second embodiment in that a rotational speed sensor 72, instead of the crank phase sensor 62, is provided for detecting a rotational speed of the crank shaft 18. Additionally, an exhaust gas temperature sensor 74 is provided for detecting a temperature of the exhaust gas flowing through each of the exhaust branch pipe 28, and an ammonia concentration sensor 76 is mounted in the exhaust path 48 downstream of the SCR catalyst converter 4 6. The other features of the third embodiment are the same as those of the second embodiment.

According to this third embodiment, a rotational speed of the crank shaft 18 is detected by the rotational speed sensor 72 as an operational state quantity of the reciprocating marine diesel engine 10 in operation, while temperature of the exhaust gas flowing through the exhaust branch pipes 26 is detected by the respective exhaust gas temperature sensors 74. Detection signals thus obtained are transmitted to a controller 70.
As shown in Fig. 5, there are stored in the controller 70 a correlation map indicating relationship between measurement value of ammonia measured at the outlet of the SCR catalyst converter 46 and aqueous urea solution supply quantity, a correlation map indicating relationship between crank shaft rotational speed and output of the reciprocating marine diesel engine 10 and relationship between these values and required aqueous urea solution supply quantity, and a correlation map indicating relationship between exhaust gas temperature and required urea supply quantity.

The controller 70 determines an output of the reciprocating marine diesel engine 10 from the known correlation between crank shaft rotational speed and output of the reciprocating marine diesel engine 10 based on a detected value of the rotational speed sensor 72.

Required quantities of supplied aqueous urea solution are preliminarily obtained, from the correlation map, with respect to respective operational state quantities such as output and exhaust gas temperature of the reciprocating marine diesel engine 10. An aqueous urea solution supply quantity is set based on these correlation maps and the controller 70 controls the aqueous urea solution supply device 52 to realize this set value.
Further, the ammonia concentration sensor 76 detects a residual ammonia concentration, and the controller 70 controls the aqueous urea solution supply device 52 based on the correlation maps so as to decrease the residual ammonia concentration.

In addition to the advantageous effects provided by the second embodiment, this third embodiment provides an effect that the quantity of residual NO_{X} can be decreased by accelerating reduction reaction of NO_{X} in the exhaust gas since the aqueous urea solution can be supplied in an optimum manner that is previously set according to the current operational state of the reciprocating marine diesel engine 10.
Further, since the aqueous urea solution supply quantity is controlled by the controller 70 so as to decrease the residual ammonia concentration downstream of the SCR catalyst converter 46, the concentration of residual ammonia that is emitted outside can be decreased to an extremely small value.

Although in the embodiments described above, the invention has been applied to a reciprocating marine diesel engine, the range of application of the invention is not limited to marine diesel engines, but the invention is applicable to other types of reciprocating diesel engines, such as stationary diesel engines for generator, and those for automobiles.

### INDUSTRIAL APPLICABILITY

This invention, when applied to a reciprocating internal combustion engine having a turbocharger in an exhaust path, enables a SCR system to efficiently remove NO_{X} in exhaust gas without deteriorating performance of the turbocharger.

## Claims

1. An exhaust gas purification method for a reciprocating internal combustion engine provided with a turbocharger, which is configured to supply a reducing agent to an exhaust path of the reciprocating internal combustion engine so that NO_{X} in exhaust gas is removed by causing the reducing agent to react with the NO_{X} over a reduction catalyst, the method comprising:
a urea decomposition step of supplying an aqueous urea solution to the exhaust path between the reciprocating internal combustion engine and the turbocharger so as to hydrolyze the aqueous urea solution into ammonia gas with potential heat of the exhaust gas;
a mixing step of uniformly mixing the ammonia gas with the exhaust gas by introducing the ammonia gas into a turbulent field of the exhaust gas formed within a turbine of the turbocharger; and
a reducing step of removing NO_{X} in the exhaust gas by reducing the NO_{X} with the ammonia gas in the presence of the reduction catalyst within the exhaust path downstream of the turbine.

2. The exhaust gas purification method for a reciprocating internal combustion engine according to claim 1, wherein an ammonia concentration in the exhaust gas after the reducing step is detected, and a quantity of the aqueous urea solution to be supplied is adjusted based on this detected value so as to reduce the concentration of residual ammonia in the exhaust gas.

3. The exhaust gas purification method for a reciprocating internal combustion engine according to claim 1 or 2, wherein an operational state quantity of the reciprocating internal combustion engine is detected, and a quantity of the aqueous urea solution to be supplied is adjusted to a preliminarily set supply quantity according to this detected value so as to reduce the concentration of NO_{X} and the concentration of residual ammonia in the exhaust gas.

4. An exhaust gas purification system for a reciprocating internal combustion engine provided with a turbocharger, having on an exhaust path of the reciprocating internal combustion engine a reducing agent supply unit, and a reduction unit which is arranged downstream of the reducing agent supply unit and reduces NO_{X} by causing the exhaust gas to react with the reducing agent over a reduction catalyst, the exhaust gas purification system comprising:
an aqueous urea solution supply unit which is arranged on the exhaust path between the reciprocating internal combustion engine and the turbocharger and supplies an aqueous urea solution into exhaust gas;
a urea decomposition zone which is arranged on the exhaust path between the aqueous urea solution supply unit and the turbocharger, and hydrolyzes the aqueous urea solution into ammonia gas with potential heat of the exhaust gas before the aqueous urea solution supplied into the exhaust path reaches the turbocharger ; and
a reduction unit which is arranged on the exhaust path downstream of the turbocharger and removes NO_{X} in the exhaust gas by reducing the NO_{X} with the ammonia gas in the presence of the reduction catalyst.

5. The exhaust gas purification system for a reciprocating internal combustion engine according to claim 4, wherein:
the aqueous urea solution supply unit is provided on an exhaust branch pipe connected to the reciprocating internal combustion engine and to an exhaust manifold, and a phase detection sensor is provided for detecting a crank phase of the reciprocating internal combustion engine; and
the aqueous urea solution is supplied to the exhaust branch pipe synchronously with a timing when an exhaust valve of the reciprocating internal combustion engine is opened.

6. The exhaust gas purification system for a reciprocating internal combustion engine according to claim 4 or 5, wherein the aqueous urea solution is sprayed into the exhaust gas by means of the aqueous urea solution supply unit, and the position of the aqueous urea solution supply unit is set to such a position that the sprayed aqueous urea solution can be vaporized before reaching the turbocharger.
